# EUROPEAN PATENT SPECIFICATION

(11) **EP 0 507 980 B1**
(45) Date of publication and mention of the grant of the patent: **23.07.1997**
(21) Application number: 91105888.1
(22) Date of filing: 12.04.1991
(51) Int. Cl.: G05B 19/416

(54) **Velocity-variation minimization control method for robot**
Regelungsverfahren zur Geschwindigkeitsveränderungsminimierung eines Roboters
Méthode de commande de minimisation de la variation de la vitesse pour un robot

(43) Date of publication of application: 14.10.1992
(73) Proprietor: KAWASAKI JUKOGYO KABUSHIKI KAISHA, Chuo-ku, Kobe-shi, Hyogo-ken (JP)
(72) Inventor: Nakatsuchi, Yoshiaki, Kobe-Shi, Hyogo-Ken (JP); Yano, Tatsuo, Ono-Shi, Hyogo-Ken (JP)
(74) Representative: Klunker . Schmitt-Nilson . Hirsch

(56) References cited:
- EP-A- 0 319 587
- US-A- 4 262 336
- STEUERUNGSTECHNIK. vol. 2, no. 9, September 1969, MAINZ DE pages 342 - 349; Dieter Schmid: "Interpolation bei numerischen Bahnsteuerungen"
- PROCEEDINGS OF THE INSTITUTION OF ELECTRICAL ENGINEERS. vol. 126, no. 3, March 1979, STEVENAGE GB pages 249 - 252; G. Ledwich: "Adaptive excitation control"

## Description

The present invention relates to a velocity-variation minimization control method for a robot and, in particular, to such a method suitable for application to a robot that performs painting or sealing work.

In general, a robot that performs painting or sealing work is required to move along complex path both at high speed and smoothly.

Therefore, such movements are realized by minutely specifying details of velocity and path, and such specification is done by teaching the specified velocity and specified path to a robot arm or limb at a fine pitch. In other words, a smooth path is obtained by detailed specifications for each of a large number of short distances or each of a large number of short periods of time.

However, with this method, the algorithms required for teaching by detailed specification are complicated and hence the amount of calculation required increases, the necessary high velocities cannot be obtained, and velocity variations cannot be avoided.

For that reason, smooth path control using high-order functions has been proposed.

For example, Japanese Patent Laid-Open Number 62-72008 (1987) illustrates a fifth-order function method which can obtain a path in which variations with time in acceleration (second-order changes in velocity) are minimized, wherein (1) position at start and end points, (2) velocity vectors at start and end points, (3) acceleration vectors at start and end points, and (4) the time required to move between the two points, act as conditions for obtaining a path between two points.

However, with this method, the user must take into consideration factors such as control based on the robot's abilities when specifying the time taken to move between the two points, which is a scalar quantity, and there is a problem that the path itself and the movement velocity can vary with the specified value of the movement time.

From document EP-A1-0 319 587 a spline interpolation method has come to be known. In this known method, a spline curve is represented by a cubic equation. Four points, i.e., two points and two end points or three points and one end point are given to determine four coefficients of the cubic equation and to effect the interpolation. Since cubic equations are sequentially found for the remaining point sequences and the distance between the present position and the next point is repeatedly interpolated, no particular automatic programming apparatus is required for this known method. The interpolation can be effected even when a curve is to be determined by successively receiving the data.

EP-A1-0 319 587 therefore discloses that a trace between two points is expressed by a cubic equation of time and that coefficients of the cubic equation are obtained from positions, velocity and moving time. Furthermore, the moving time is uniquely obtained from the moving distance all the length of chord between the two adjacent points.

From document US-A-4,262,336 a multi-axis contouring control system has come to be known. According to this known system, a numerically control machine includes a first computer which stores command data for a path and derives sets of interpolatin point data from said command data for a plurality of points along the path. A second computer stores two sets of interpolation point data from said first computer and extrapolates a set of said stored interpolation point data by incrementing velocity with acceleration and position with velocity using a noncircular high order polynominal to produce a sequence of driver command signals. Hence, US-A-4,262,336 discloses an interpolation method for two points.

This object is solved according to the invention by a velocity-variation minimization control method according to the features set out in independent claim 1. Dependent claim 2 exhibits further improvements of subject-matter of claim 1.

There is provided a velocity-variation minimization control method for robot comprising: a step of substituting a position vector for a start point, a velocity vector for said start point, a position vector for an end point, a veleocity vector for said end point, and a provisional movement time into equations that express the position and velocity of said robot as cubic functions with respect to time, to obtain solutions for coefficients of said cubic functions; a step of obtaining a sum of squares of differences between a velocity obtained using said coefficients and a target velocity; and a step of using convergence calculations to obtain a value of said movement time that minimizes said sum of squares; a step of controlling said robot in such a manner that the far end of said robot follows a path based on said converged movement time.

A position vector for a start point, a velocity vector for the start point, a position vector for an end point, a velocity vector for the end point, and a provisional movement time are substituted into equations that express the position and velocity of the robot as cubic functions with respect to time, to obtain solutions for coefficients of the cubic functions; a sum of squares of differences between a target velocity and a velocity obtained using these coefficients is obtained; and convergence calculations are used to obtain a value of the movement time that minimizes the sum of squares. By controlling the robot in such a manner that the far end of the robot follows a path based on the converged movement time, velocity variations can be minimized and a smooth path can be obtained.

A patch can be obtained that has velocities approaching those of target velocities with minimized velocity variations, by simply substituting start point and end point vectors relating to position and velocity, and a provisional movement time. Therefore, a smooth robot movement can be realized, without the user having to specify a correct movement time.

In the accompanying drawing,

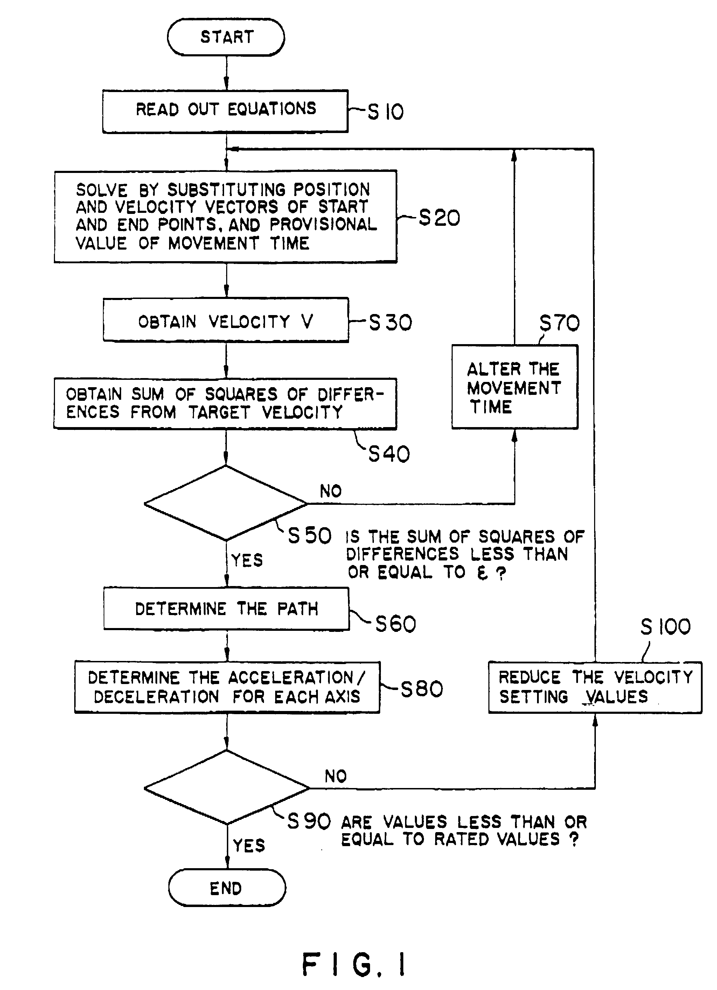

Figure 1 is a flow chart illustrating the method of the present invention.

The present invention-will be described below in detail with reference to an embodiment whose flow chart is shown in Fig. 1. Positions on the path of the far end of the robot can be defined by the following cubic functions:${\text{X = a}}_{\text{x}} {\text{t}}^{\text{3}} {\text{+ b}}_{\text{x}} {\text{t}}^{\text{2}} {\text{+ c}}_{\text{x}} {\text{t + d}}_{\text{x}}$${\text{Y = a}}_{\text{y}} {\text{t}}^{\text{3}} {\text{+ b}}_{\text{y}} {\text{t}}^{\text{2}} {\text{+ c}}_{\text{y}} {\text{t + d}}_{\text{y}}$${\text{Z = a}}_{\text{z}} {\text{t}}^{\text{3}} {\text{+ b}}_{\text{z}} {\text{t}}^{\text{2}} {\text{+ c}}_{\text{z}} {\text{t + d}}_{\text{z}}$ The velocity of the end of the robot limb can be obtained by differentiating equations (1), (2), and (3) with time, as follows:${\text{Vx = dx/dt = 3a}}_{\text{x}} {\text{t}}^{\text{2}} {\text{+ 2b}}_{\text{x}} {\text{t + c}}_{\text{x}}$${\text{Vy = dy/dt = 3a}}_{\text{y}} {\text{t}}^{\text{2}} {\text{+ 2b}}_{\text{y}} {\text{t + c}}_{\text{y}}$${\text{Vz = dz/dt = 3a}}_{\text{z}} {\text{t}}^{\text{2}} {\text{+ 2b}}_{\text{z}} {\text{t + c}}_{\text{z}}$ Note that each of these equations can be stored beforehand in a memory section of the control device, and can be read out as necessary when velocity control is required (step S10 of Fig. 1).

In this case, the above coefficients aₓ, bₓ, cₓ, dₓ, a_{y}, b_{y}, c_{y}, d_{y}, a_{z}, b_{z}, c_{z}, and d_{z} can be obtained by substituting the position vector for the start point, the position vector for the end point, the velocity vector for the start point, the velocity vector for the end point, and a provisional movement time into the equations (step S20).

Therefore, the velocity V of the end of the robot is obtained in step S30 as follows:$\text{V =} \sqrt{{\text{V}}_{\text{x}} {}^{\text{2}} {\text{+ V}}_{\text{y}} {}^{\text{2}} {\text{+ V}}_{\text{z}} {}^{\text{2}}}$ In order to make this velocity approach the target velocity, the calculation in step S40 sums the squares of the difference between this velocity and the target velocity V_{ref}, as follows:${\text{S = ∫(V}}_{\text{ref}} {\text{- V)}}^{\text{2}} \text{dt}$ A movement time that minimizes the value of S is then obtained by a convergence calculation. In other words, step S50 determines whether the above differences have converged by checking whether or not the result is less than or equal to a minute constant value ε, and if it is less than or equal to ε, step S60 determines the path between the two points. At that point, velocity variations are at a minimum.

If it is determined in step S50 that the differences have not converged, the movement time is altered in step S70 and the flow returns to step S20.

Note that absolute values of the start and end point velocity vectors are specified by the user, but directions can be automatically determined with respect to the teaching point, so the user does not need to specify these values.

If it is found as a result of obtaining the accelerations and decelerations required to realize the thus-obtained path (step S80) that these values exceed rated values (step S90), the velocity settings for the start and end points are reduced in step S100, and the flow returns to step S20 until a feasible path can be obtained.

The above calculations can be performed by using a high-speed microprocessor or the like.

## Claims

1. A velocity-variation minimization control method for robot comprising the steps of:
a) preparing cubic equations expressing positions of an effector of a robot and quadratic equations expressing velocity of said effector,
a1) said quadratic equations obtained by differentiating said cubic equations,
a2) said cubic equations and said quadratic equations being functions with respect of time;
b) obtaining solutions for coefficients of said equations by substituting
b1) a position vector for an operation start point,
b2) a velocity vector for said operation start point,
b3) a position vector for an operation end point,
b4) a velocity vector for said operation end point, and
b5) a provisional movement time for moving from said operation start point to said operation end point
into said equations;
c) obtaining a sum of squares of differences between a velocity obtained using said coefficients and a target velocity;
d) performing convergence calculations to obtain a value of said movement time that minimizes said sum of squares; and
e) controlling said robot by moving said effector along a path using converged movement time.

2. A velocity-variation minimization control method for robot according to claim 1, further comprising the steps of:
a) after performing said convergence calculations, obtaining acceleration and deceleration values for each axis of said robot in such a manner that the obtained path is realized;
b) comparing the obtained acceleration and deceleration values with rated values;
c) when said acceleration and deceleration values exceed said rated values, reducing velocity setting values; and
d) returning to said step of obtaining solutions for coefficients by using said reduced velocity setting values.

## Patentansprüche

1. Steuerverfahren zur Minimierung der Geschwindigkeitsänderung bei einem Roboter, umfassend die Schritte:
a) Erstellen typischer Gleichungen, die Stellungen eines Werkzeugs eines Roboters ausdrücken, sowie quadratischer Gleichungen, die die Geschwindigkeit des Werkzeugs ausdrücken,
a1) wobei die quadratischen Gleichungen durch Differenzieren der kubischen Gleichungen erhalten werden,
a2) und die kubischen Gleichungen sowie die quadratischen Gleichungen Funktionen der Zeit sind;
b) Ermitteln von Lösungen für die Koeffizienten der Gleichungen durch Einsetzen
b1) eines Stellungsvektors für einen Betriebsstartpunkt,
b2) eines Geschwindigkeitsvektors für den Betriebsstartpunkt,
b3) eines Stellungsvektors für einen Betriebsendpunkt,
b4) eines Geschwindigkeitsvektors für den Betriebsendpunkt, und
b5) einer vorläufigen Bewegungszeit für die Bewegung von dem Betriebsstartpunkt zum Betriebsendpunkt
in die Gleichungen;
c) Ermitteln einer Summe von Quadraten der Differenzen zwischen einer unter Verwendung der Koeffizienten erhaltenen Geschwindigkeit und einer Sollgeschwindigkeit;
d) Ausführen von Konvergenzberechnungen, um einen Wert der Bewegungszeit zu ermitteln, welche die Summe der Quadrate minimiert; und
e) Regeln des Roboters durch Bewegen des Werkzeugs entlang einem Weg unter Verwendung der konvergierten Bewegungszeit.

2. Regelverfahren nach Anspruch 1, gekennzeichnet durch die Schritte:
a) nach der Ausführung der Konvergenzberechnungen, Ermitteln von Beschleunigungs- und Verzögerungswerten für jede Achse des Roboters derart, daß der ermittelte Weg realisiert wird;
b) Vergleichen der ermittelten Beschleunigungs- und Verzögerungswerte mit Sollwerten;
c) wenn die Beschleunigungs- und Verzögerungswerte die Sollwerte übersteigen, Verringern der Geschwindigkeits-Einstellwerte; und
d) Zurückkehren zu dem Schritt, bei dem die Lösungen für die Koeffizienten ermittelt werden, wobei die reduzierten Geschwindigkeitseinstellwerte verwendet werden.

## Revendications

1. Procédé de commande de minimisation de la variation de vitesse pour un robot, comprenant les étapes de :
a) préparation des équations cubiques exprimant les positions d'un effecteur d'un robot et des équations quadratiques exprimant la vitesse dudit effecteur,
a1) lesdites équations quadratiques étant obtenues par différentiation desdites équations cubiques,
a2) lesdites équations cubiques et lesdites équations quadratiques étant des fonctions du temps ;
b) obtention de solutions pour les coefficients desdites équations en substituant
b1) un vecteur de position à un point de départ de l'opération,
b2) un vecteur vitesse audit point de départ de l'opération,
b3) un vecteur de position à un point final de l'opération,
b4) un vecteur vitesse audit point final de l'opération, et
b5) un temps de déplacement provisoire au déplacement entre ledit point de départ de l'opération et ledit point final de l'opération dans lesdites équations ;
c) obtention d'une somme des carrés des différences entre une vitesse calculée en utilisant lesdits coefficients et une vitesse cible ;
d) exécution des calculs de convergence pour obtenir une valeur dudit temps de déplacement qui minimise ladite somme des carrés ; et
e) commande dudit robot en déplaçant ledit effecteur le long d'une trajectoire en utilisant le temps de déplacement convergent.

2. Procédé de commande de minimisation de la variation de vitesse pour un robot, selon la revendication 1, comprenant les étapes de :
a) après l'exécution desdits calculs de convergence, obtention de valeurs d'accélération et de décélération pour chaque axe dudit robot de façon que la trajectoire obtenue soit réalisée ;
b) comparaison des valeurs d'accélération et de décélération obtenues à des valeurs nominales ;
c) lorsque lesdites valeurs d'accélération et de décélération dépassent lesdites valeurs nominales, réduction des valeurs de réglage de la vitesse ; et
d) retour à ladite étape d'obtention des solutions pour les coefficients en utilisant lesdites valeurs réduites de réglage de la vitesse.
